# FASCICULE DE BREVET EUROPEEN

(11) **EP 0 551 047 B1**
(45) Date de publication et mention de la délivrance du brevet: **27.11.1996**
(21) Numéro de dépôt: 92403592.6
(22) Date de dépôt: 30.12.1992
(51) Int. Cl.: B25B 23/10, F16B 43/00

(54) **Dispositif de fixation à butée-guide axiale escamotable**
Haltevorrichtung mit entfernbarer Zentrierbüchse
Holding device with removable guide bush

(30) Priorité: 10.01.1992 FR 9200225
(43) Date de publication de la demande: 14.07.1993
(73) Titulaire: NACAM, F-41100 Vendôme (FR)
(72) Inventeur: Courgeon, Jean-Claude, F-41100 Vendôme (FR)
(74) Mandataire: Phélip, Bruno

(56) Documents cités:
- EP-A- 0 187 498
- DE-A- 2 732 099
- FR-A- 2 522 572
- US-A- 4 719 828

## Description

L'invention est relative à un dispositif de fixation d'éléments à assembler par vissage, qui comporte un prépositionnement axial des composants de ce dispositif de fixation ; et elle s'applique plus particulièrement à une colonne de direction de véhicule automobile.

La fixation par vis et écrou ne présente aucune difficulté lorsque la zone de travail est accessible, ce qui permet un positionnement aisé des différents éléments du système de fixation. En revanche, le problème se complique et peut s'avérer difficile ou même impossible du fait de l'évolution des moyens de production, tels que l'automatisation ou la robotisation, et aussi du fait des problèmes techniques entraînés par la miniaturisation des produits à assembler, ainsi que par le manque d'accès nécessitant un montage "en aveugle". Dans certaines de ces configurations, l'impossibilité de positionner l'un des éléments du système vis-écrou, c'est-à-dire l'écrou ou la partie taraudée, ou même dans d'autres applications la tête de la vis, nécessite de faire appel aux techniques de soudure, de sertissage, de collage ou même de fixation par cage d'écrou. De plus, dans les véhicules automobiles modernes, la place est de plus en plus mesurée pour les différents éléments, et les montages manuels ou en automatique se font généralement dans un environnement très mesuré, délicat et fragile.

Un autre aspect des techniques modernes est le manque de précision de positionnement d'un robot, d'un automate ou du montage en aveugle par l'opérateur. Enfin, la miniaturisation des différents éléments à entraîner nécessite une précision plus grande dans le positionnement de ces différents éléments durant l'assemblage et le blocage du dispositif de fixation.

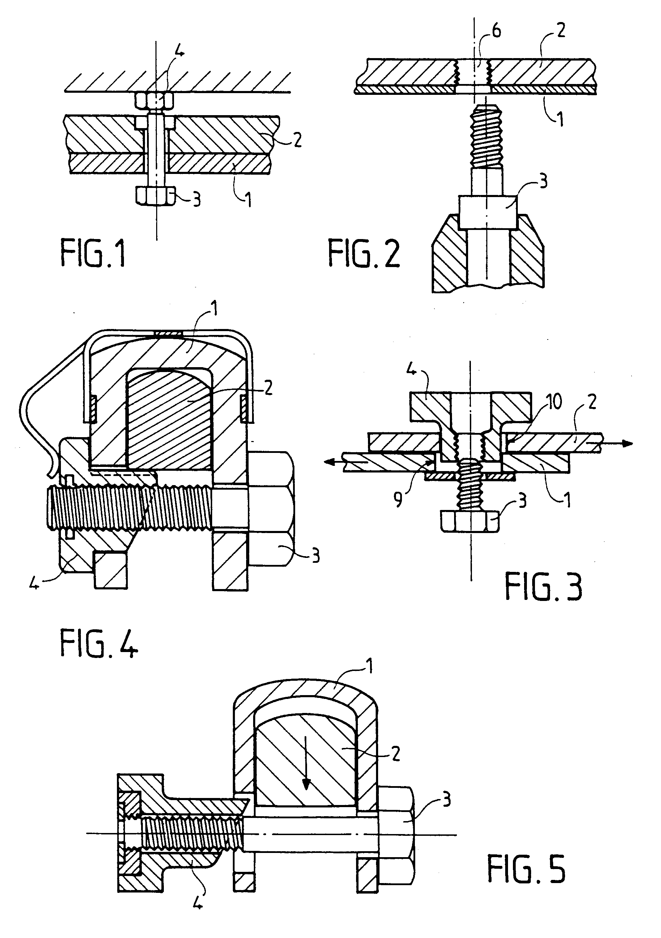

La Figure 1 représente un dispositif de fixation connu, qui est constitué par une vis 3 et un écrou 4 pour l'assemblage de deux éléments 1 et 2. Un logement est prévu dans l'élément 2 pour recevoir l'écrou 4, qui est dans une zone difficilement accessible et au voisinage d'un environnement fragile ou non utilisable, représenté sur la Figure par des hachures. Malgré une tenue de l'écrou 4 dans son logement afin d'assurer son maintien axial et son arrêt en rotation, on peut mal présenter la vis 3 par rapport à l'écrou 4 lors de l'engagement de celle-ci. En poussant alors la vis 3, on risque de refouler l'écrou 4 de son logement. Dans ce cas, il y a perte du guidage de l'écrou 4 et de son arrêt en rotation, et cet écrou 4 s'échappe et se perd alors dans une zone inaccessible.

La Figure 2 représente un dispositif de fixation connu, qui est constitué par une vis 3 destinée à assembler deux éléments 1 et 2, la vis 3 venant s'engager dans une partie taraudée 6 aménagée dans l'élément 2 à assembler. Dans ce type d'assemblage qui est réalisé notamment en construction automobile par des machines automatiques, il n'y a pas de guidage de la vis et un positionnement correct de celle-ci par rapport à l'axe de fixation des deux éléments à assembler 1 et 2. Ce type d'assemblage présente ainsi l'inconvénient de mal présenter la vis 3, et a comme conséquence un risque de détérioration de l'élément 1 ainsi que de la partie taraudée 6 de l'élément 2.

La Figure 3 représente un dispositif de fixation connu, qui est constitué par une vis 3 et un écrou 4, qui sont montés dans deux éléments 1 et 2 afin d'assurer leur assemblage. Chacun des deux éléments 1 et 2 possède un trou de passage, référencés respectivement 9 et 10, dans lesquels vient s'engager une partie cylindrique de l'écrou 4. Afin d'assurer le montage, la vis 3 vient s'engager dans le taraudage de l'écrou 4, qui pénètre dans le trou 10 de l'élément 2 et dans le trou 9 de l'élément 1, jusqu'à ce que l'écrou vienne s'appliquer contre la face de l'élément 2 afin d'assurer le blocage et l'assemblage de l'ensemble. Dans ce type de réalisation connu, et notamment utilisé en montage automatique dans les chaînes de fabrication des véhicules automobiles, la vis 3 peut être mal présentée par rapport à l'axe de fixation des trous 9 et 10 et de l'écrou 4, et elle peut de ce fait repousser l'écrou 4 préengagé dans ces trous 9 et 10. Il y a alors risque de perte de l'écrou 4 dans une zone qui peut être fragile ou inaccessible.

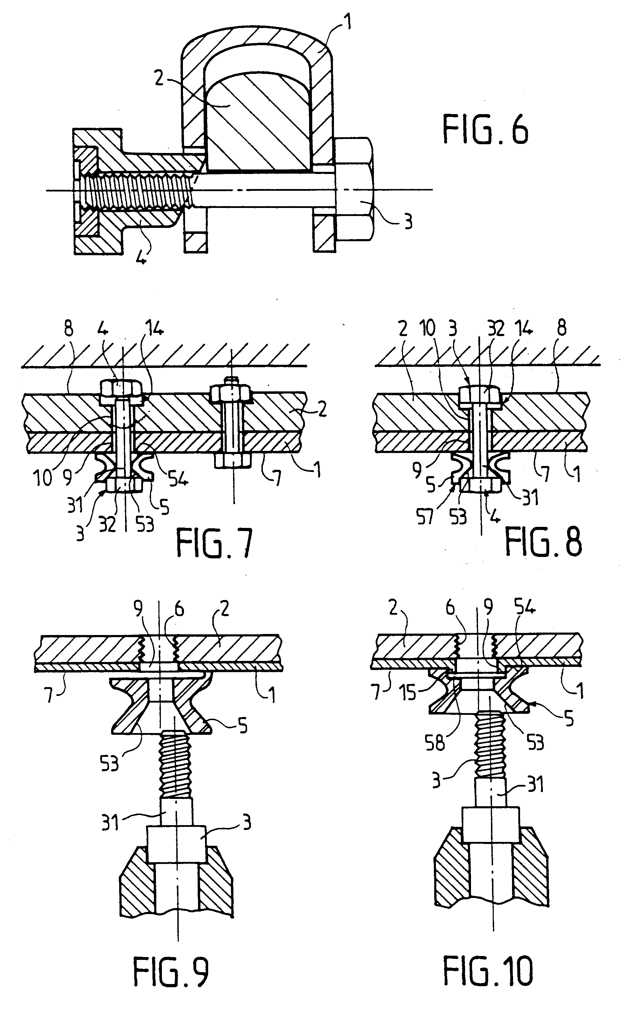

Les Figures 4, 5 et 6 représentent un dispositif de fixation connu par vis 3 et écrou 4, destiné à assembler un étrier 1 avec un élément mâle à assembler 2. L'étrier 1 est par exemple solidaire d'une colonne de direction d'automobile, et l'élément à assembler mâle 2 est solidaire de l'axe du boîtier de direction. Dans ce type de montage, la vis 3 pénètre dans un trou aménagé dans une des branches de l'étrier 1, et elle vient s'engager dans la partie taraudée 6 de l'écrou 4 qui est montée sur l'autre branche de cet étrier 1. L'élément mâle 2 vient s'engager à l'intérieur de cet étrier 1, et sa position est assurée en fin de blocage par la vis 4 qui vient s'engager sous cet élément mâle 2. Lorsque le montage de cet assemblage se passe convenablement, on obtient l'ensemble représenté en position bloquée sur la Figure 4. Lors du montage, l'écrou 4 est maintenu en position axiale avec un dispositif approprié qui peut être un clip, comme celui représenté sur la Figure 4, et il est arrêté en rotation par une forme particulière de l'écrou 4 coopérant avec un alésage aménagé dans l'étrier 1. Généralement du fait de l'environnement, l'écrou 4 est dans une zone fragile ou non accessible, et le montage de la vis 3 se fait en aveugle par rapport à cet écrou 4. On risque alors de se trouver dans le cas de la Figure 5, où la vis 3 étant mal positionnée repousse l'écrou 4 de son logement, avec comme conséquence un risque de déplacement de l'élément mâle 2 à assembler, qui retombe suivant le sens de la flêche et vient s'appliquer sur la tige de la vis 3. Lorsque l'on effectue le blocage, comme cela est représenté sur la figure 6, l'élément mâle à assembler 2 reste appliqué contre la tige de la vis 3, et l'écrou 4 vient s'appliquer contre cet élément mâle 2 mal positionné au lieu de venir glisser sous cet élément mâle 2, afin de garantir son positionnement convenable. On a alors un système bloqué qui est monté en mode dégradé, et l'étrier 1 et l'élément mâle à assembler 2 sont en position incorrecte l'un par rapport à l'autre.

Le document DE-A-27 32 099 concerne un support de retenue d'une vis sur une pièce, pour la fixation de laquelle cette vis doit être utilisée.

Ce support est adapté pour maintenir la vis dans une position voulue. Il comprend une douille ou rondelle dans laquelle la vis peut être vissée. L'enfoncement de la tête de vis dans ce support, lors de la fixation de la pièce, provoque l'expansion de celui-ci ou éventuellement sa rupture, permettant son éjection ou son retrait.

Ce support présente au moins une fente longitudinale ou une amorce de rupture apte à permettre la déformation.

Ce document divulgue donc un support destiné à recevoir une vis, le support étant escamotable lors du vissage de la vis.

Le but de la présente invention est de proposer un dispositif de fixation à butée-guide axiale escamotable, qui évite les inconvénients décrits ci-dessus, et qui consiste à provoquer un positionnement relatif temporaire et axial des éléments à solidariser; ce prépositionnement étant maintenu dans le cas notamment où un mouvement maladroit, qu'il soit manuel ou robotisé, viendrait à désolidariser ou à déplacer de façon excessive un ou plusieurs des éléments à assembler.

L'invention se rapporte ainsi à un dispositif de fixation destiné à assembler au moins deux éléments comprenant un système avec une vis et un écrou.

Selon une caractéristique essentielle de l'invention, l'un des éléments est solidaire d'une colonne de direction automobile et l'autre élément solidaire d'un axe de boîtier de direction et ledit dispositif comprend une butée-guide axiale escamotable disposée entre la face externe de l'un des éléments à assembler et la tête de la vis ou l'écrou, qui reçoit le couple de serrage pour venir s'appliquer sur cette face externe , ladite butée-guide, permettant dans un premier temps d'assurer un prépositionnement relatif temporaire et axial de la vis ou l'écrou, ladite butée-guide étant, dans un deuxième temps, apte à s'esquiver sous l'effet de la force axiale de pénétration lorsque la vis continue à être serrée jusqu'au blocage de la fixation.

Préférentiellement selon l'invention, la butée-guide est constituée par une couronne:
- dont l'évidement central a des dimensions permettant le passage de la tige de la vis,
- dont la périphérie de la partie externe a des dimensions supérieures aux dimensions de la tête de la vis ou de l'écrou,
- et dont la face externe sur laquelle s'applique la tête de la vis ou l'écrou, est conique.

Selon un premier mode de réalisation de l'invention, la butée-guide comporte une ouverture sur toute sa longueur axiale, de manière que sous l'action du couple de serrage, elle s'ouvre et puisse passer à travers la tige de la vis ou de l'écrou de serrage. De plus, la butée-guide comporte une entaille aménagée à la périphérie de la partie externe, et disposée de manière à être diamétralement opposée à l'ouverture. Selon l'invention, la butée-guide peut aussi avoir des entailles aménagées à la périphérie de la partie externe, et disposées symétriquement par rapport à l'ouverture, ou dans une autre variante de l'invention, elle peut avoir des entailles qui sont disposées de manière à être diamétralement opposées. Dans le but d'améliorer le détrompage, et selon une autre variante de l'invention, la butée guide comporte deux faces coniques symétriques par rapport au plan radial central de l'axe longitudinal de cette butée-guide. Afin de s'adapter à certaines variantes d'assemblage d'éléments et, dans une de ces variantes, la butée-guide présente une face interne opposée à la face externe conique, qui comporte un logement cylindrique destiné à s'engager dans un bossage de l'élément à assembler correspondant. Dans une autre variante, la butée-guide a sa face externe conique, qui comporte un logement destiné à recevoir l'écrou qui reçoit le couple de serrage.

Selon un deuxième mode de réalisation de l'invention, la partie centrale de la butée-guide a des dimensions plus grandes que les dimensions de la tête de la vis ou de l'écrou de serrage, cette partie centrale ayant des caractéristiques mécaniques faibles par rapport aux caractéristiques de la partie externe, de manière que sous l'action du couple de serrage, elle s'écrase et soit rejetée à l'extérieur vers la partie externe, qui est ainsi éjectée en passant à travers la tête de la vis ou de l'écrou de serrage.

Dans un premier type de montage selon l'invention, la tige de la vis traverse la butée-guide et les trous aménagés dans les éléments à assembler, pour venir s'engager dans l'écrou qui est maintenu en place dans un logement aménagé.

Dans un deuxième type de montage selon l'invention, la tige de la vis traverse les trous aménagés dans les éléments à assembler, pour venir s'engager dans la butée-guide et dans l'écrou ; la tête de la vis étant maintenue en place dans un logement aménagé dans l'élément à assembler correspondant, et l'écrou étant monté dans un logement aménagé dans la butée-guide.

Dans un troisième type de montage selon l'invention, la tige de la vis traverse la butée-guide, une rondelle d'appui du premier élément à assembler et le trou aménagé dans cet élément, pour venir s'engager dans l'écrou qui traverse le trou du deuxième élément à assembler et qui s'engage dans le trou du premier élément à assembler, l'écrou étant maintenu en place dans ces deux trous.

Dans un quatrième type de montage selon l'invention, celui-ci comporte :
- un élément à assembler en forme d'étrier de section en U possédant deux branches sensiblement parallèles reliées par un pont, qui est solidaire d'une colonne de direction d'automobile ;
- un élément à assembler mâle s'engageant entre les branches de l'étrier, qui est de section non circulaire, possédant trois méplats et un secteur cylindrique, deux méplats étant disposés symétriquement par rapport au secteur cylindrique et parallèles l'un par rapport à l'autre, de manière à pouvoir coulisser entre les branches de l'étrier, le troisième méplat étant perpendiculaire aux deux autres, l'élément à assembler mâle étant solidaire de l'axe du boîtier de direction ;
- un trou aménagé dans l'une des branches de l'étrier, et un logement aménagé dans l'autre branche, le trou et le logement étant alignés l'un par rapport à l'autre, le trou ayant des dimensions correspondantes au passage de la tige de la vis et étant aligné avec le logement, qui a des dimensions plus importantes correspondantes aux dimensions du support de l'écrou ; - la vis dont la tige traverse la butée-guide et le trou de la branche correspondante de l'étrier, vient s'engager dans l'écrou dont le support est monté dans le logement de la branche correspondante de l'étrier, le support d'écrou étant maintenu dans ce logement.

Préférentiellement, le support d'écrou comporte :
- une extrémité circulaire munie d'un méplat qui s'engage dans le logement circulaire avec un méplat de dimensions correspondantes, le méplat de l'extrémité circulaire venant s'appliquer sous le troisième méplat de l'élément à assembler mâle en fin de blocage ;
- un corps de dimensions plus importantes que l'extrémité, qui reçoit l'écrou et qui vient s'appuyer en fin de blocage contre la face externe de la branche correspondante de l'étrier, l'écrou comportant un frein d'écrou.

Pour maintenir la butée-guide en rotation, un arrêt en rotation de la butée-guide est monté dans la branche de l'étrier sur laquelle s'applique la butée-guide, cet arrêt en rotation pénétrant dans l'ouverture de la butée-guide, de manière à orienter son éjection lors du blocage.

Dans une variante de réalisation de l'invention, l'arrêt en rotation de la butée-guide est constitué par un prolongement de l'extrémité d'un clip, qui vient pénétrer dans l'ouverture de la butée-guide, de manière à orienter son éjection lors du blocage ; ce clip étant en forme de mâchoire qui vient coiffer l'étrier, et dont l'une des extrémités a une face incurvée qui vient s'appliquer contre le corps du support d'écrou, et dont l'autre extrémité vient s'appuyer contre la face externe de l'autre branche de l'étrier sur laquelle s'applique la butée-guide.

Le dispositif de fixation selon l'invention présente ainsi l'avantage d'assurer un prépositionnement relatif temporaire et axial des éléments à assembler, afin de donner toute garantie de cet assemblage dans les types de montage modernes automatiques ou robotisés, ou encore dans les types de montage en aveugle. Le dispositif selon l'invention permet ainsi de garantir le préassemblage contre tout mouvement maladroit, manuel ou robotisé, qui pourrait désolidariser ou déplacer de façon excessive un ou plusieurs des éléments à assembler. Ces avantages sont particulièrement intéressants dans le cas où le repositionnement des éléments à assembler dans leur position d'attente avec le système de fixation s'avèrerait difficile, voire impossible, ou lorsque l'un des éléments à assembler pourrait venir dans une zone non utilisable ou fragile de l'environnement du dispositif de fixation.

D'autres caractéristiques et avantages de l'invention ressortiront de la description qui va suivre, donnée à titre d'exemples, en référence aux dessins annexés sur lesquels :
- la Figure 1 est une vue en coupe axiale d'un dispositif de fixation à vis et écrou qui sont destinés à assembler deux éléments ;
- la Figure 2 est une vue en coupe axiale d'un dispositif de fixation à vis et partie taraudée dans l'un des deux éléments à assembler ;
- la Figure 3 est une vue en coupe axiale d'un dispositif de fixation à vis et écrou, qui sont destinés à assembler deux éléments pénétrés l'un et l'autre par cet écrou ;
- la Figure 4 est une vue en coupe axiale d'un système de fixation par vis et écrou d'un étrier d'une colonne de direction d'automobile devant être assemblé avec un élément mâle solidaire de l'axe du boîtier de direction, l'ensemble étant représenté après assemblage et blocage .
- la Figure 5 est une vue similaire à la Figure 4, où l'élément mâle est mal positionné, l'ensemble étant représenté avant blocage ;
- la Figure 6 est une vue similaire à la Figure 4, où l'élément mâle est mal positionné, l'ensemble étant représenté en position bloquée ;
- la Figure 7 est une vue en coupe axiale d'un dispositif de fixation à vis et écrou à butée-guide selon l'invention ;
- la Figure 8 est une vue en coupe axiale d'un autre mode de réalisation de l'invention d'un dispositif de fixation à vis ét écrou à butée-guide ;
- la Figure 9 est une vue en coupe axiale d'un dispositif de fixation à vis et partie taraudée dans l'un des deux éléments à assembler à butée-guide ;
- la Figure 10 est une vue en coupe axiale d'un dispositif de fixation à vis et partie taraudée dans l'un des deux éléments à assembler à butée-guide ;
- la Figure 11 est une vue en coupe axiale d'un dispositif de fixation à vis et écrou destiné à assembler deux éléments, qui sont pénétrés l'un et l'autre par cet écrou, l'ensemble étant représenté avant blocage ;
- la Figure 12 est une vue analogue à la Figure 11, l'ensemble étant représenté en position bloquée ;
- la Figure 13 est une vue en perspective cavalière à coupe axiale partielle d'un dispositif de fixation par vis et écrou à butée-guide de l'étrier d'un axe de colonne de direction avec l'élément mâle de l'axe du boîtier de direction, l'ensemble étant représenté avant blocage ;
- la Figure 14 est une vue de détail en perspective cavalière du dispositif de fixation représenté sur la Figure 13, l'étrier étant en coupe, et l'ensemble étant représenté avant blocage ;
- la Figure 15 est une coupe axiale du dispositif de fixation représenté sur les Figures 13 et 14, et comportant une variante d'arrêt en rotation, l'ensemble étant représenté avant blocage ;
- la Figure 16 est une vue suivant XVI de la Figure 14 représentée avant le positionnement correct de la butée-guide ;
- la Figure 17 est une vue analogue à la Figure 16 avec la butée-guide correctement positionnée ;
- la Figure 18 est une coupe axiale partielle du dispositif de fixation représenté sur les Figures 13 et 14 relatif à l'arrêt en rotation de la butée-guide.

Un mode de réalisation du dispositif de fixation selon l'invention est représenté sur la Figure 7. Il comporte une vis 3 qui s'engage dans un écrou 4, afin d'assembler l'un par rapport à l'autre deux éléments référencés respectivement 1 et 2. Selon une caractéristique essentielle de l'invention, ce dispositif de fixation comporte une butée-guide 5 axiale et escamotable qui est disposée entre la face externe 7 de l'élément 1 à assembler et la tête 32 de la vis 3. Lors du blocage de ce dispositif de fixation, la tête 32 de la vis 3 reçoit le couple de serrage afin de venir s'appliquer sur la face externe de l'élément 1. Pour cela, la face 8 de l'élément 2, opposée à la face 7 de l'élément 1, comporte un logement 14 dans lequel s'engage l'écrou 4, afin de maintenir cet écrou 4 en rotation et axialement dans le sens opposé à l'engagement de la vis 3.

Cette manoeuvre de blocage s'exécute en deux temps :
- un premier temps, où la butée-guide 5 assure un prépositionnement relatif temporaire et axial, de façon que la vis 3 vienne s'engager correctement dans l'écrou 4, qui est maintenu en rotation et axialement dans le logement 14 ;
- et un deuxième temps, où la vis 3 pénètre dans l'écrou 4 qui est toujours maintenu en rotation pendant ce deuxième temps, de manière à effectuer le blocage du dispositif de fixation.

La pénétration de la vis 3 dans l'écrou 4 exerce sur la butée-guide 5 une force axiale due à l'action du filetage. Cette force axiale permet à cette butée-guide 5 de s'esquiver du dispositif de fixation, de façon que la tête 32 de la vis 3 vienne s'appliquer sur la face externe de l'élément à assembler 1 correspondant.

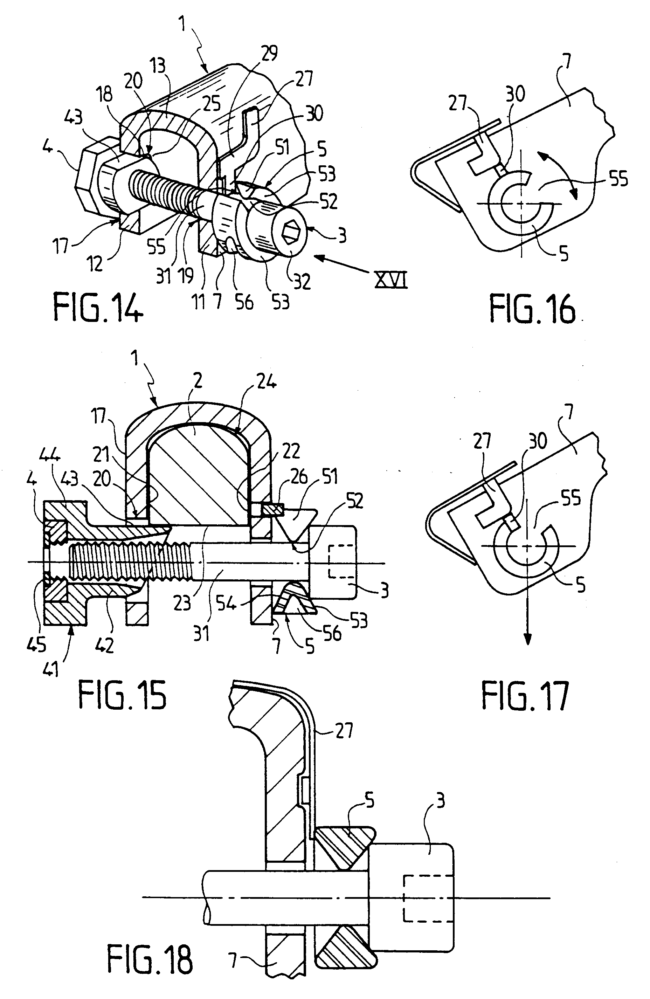

La structure de la butée-guide 5 selon l'invention se voit particulièrement bien sur la Figure 14, où elle est représentée en perspective cavalière, ainsi que sur la Figure 15 correspondante. Dans le mode de réalisation représenté sur ces Figures, la butée-guide 5 est constituée par une couronne 51, qui possède un évidement central 52. Cet évidement central 52 a des dimensions qui doivent permettre le passage de la tige 31 de la vis 3. De plus, la périphérie de la partie externe de cette couronne 51 doit avoir des dimensions supérieures aux dimensions de la tête 32 de la vis 3. Cette couronne 51 possède une face externe 53 et une face interne 54, la tête 32 de la vis 3 venant s'appliquer sur la face externe 53, tandis que la face interne 54 vient s'appliquer sur la face 7 de l'élément à assembler 1. Préférentiellement, la face externe 53 et la face interne 54 sont deux faces coniques, qui sont symétriques par rapport au plan radial central de l'axe longitudinal de cette butée-guide 5. La butée-guide 5 comporte de plus une ouverture 55, qui est réalisée sur toute sa longueur axiale, de manière que sous l'action du couple de serrage appliqué sur la vis 3, cette butée-guide 5 s'ouvre et puisse passer à travers la tige 31 de la vis 3. En fin de manoeuvre de blocage, la butée-guide 5 qui s'est ouverte, a été éjectée de manière à ce que la vis 3 puisse venir s'appliquer contre la face 7 de la branche 11. De plus, la butée-guide 5 comporte une entaille 56 qui est aménagée à la périphérie de la partie externe, et qui est disposée de manière à être diamétralement opposée à l'ouverture 55. Dans d'autres modes de réalisation non représentés sur les Figures, il peut y avoir plusieurs entailles 56 qui sont disposées symétriquement par rapport à l'ouverture 55, ces entailles 56 pouvant également être diamétralement opposées.

L'invention permet ainsi un positionnement axial et provisoire qui autorise la fixation des éléments à assembler dans le cas d'un environnement difficile et miniaturisé. La butée-guide 5 montée au préalable sur la vis 3, permet, lors de la mise en place de la vis 3, d'en limiter la course suivant son axe longitudinal sans en interdire la rotation. Cette limitation de course axiale évite que la vis 3 repousse l'écrou 4 dans la zone fragile ou non utilisable, c'est-à-dire qu'elle garantit le maintien de l'écrou 4 dans son logement 14, tout en permettant la rotation de la vis 3 qui peut ainsi s'engager dans l'écrou 4.

Cette configuration autorise ainsi sans risque la rotation et par conséquent, un début d'engagement de l'écrou 4 par rapport à la vis 3, au-delà d'une certaine tension axiale provoquée par le rapprochement des faces d'appui de ces deux éléments. Du fait de la forme particulière de la face externe 53 conique de la butée-guide 5, et d'au moins une diminution de section due à l'entaille 56 et de l'ouverture 55, la butée-guide 5 s'ouvre de façon progressive et proportionnellement au déplacement axial relatif entre la vis 3 et l'écrou 4, de façon à conserver en continu la fonction de butée axiale. En fin de course, cette butée-guide 5 atteint son ouverture maximale et se désolidarise de la vis 3.

Le choix de la matière pour cette butée-guide 5 provoque des modes de fonctionnement différents.

Dans le cas d'une matière cassante, du genre polystyrène, la butée-guide 5 se casse dès le premier tour de vissage. Ce choix est possible lorsque l'écrou 4 peut avoir une grande course à partir du moment où il est solidarisé avec la vis 3. Dans le cas où la butée-guide 5 est en matière élastique, du genre polyacétal, la butée-guide 5 ne se casse pas, mais elle s'ouvre progressivement de façon à conserver la fonction butée axiale et de ce fait, limiter en continu le mouvement axial de l'écrou 4.

La butée-guide 5 peut être réalisée suivant un autre mode d'éxécution, non représenté sur les Figures. Dans ce cas, la butée-guide 5 a des dimensions plus grandes que les dimensions de la tête 32 de la vis 3. Cette partie centrale a des caractéristiques mécaniques qui sont faibles par rapport aux caractéristiques mécaniques de la partie externe. Ainsi, sous l'action du couple de serrage, la partie centrale s'écrase et elle est rejetée à l'extérieur vers la partie externe, qui peut ainsi être éjectée en passant à travers la tête de la vis du dispositif de fixation.

Le dispositif de fixation selon l'invention, représenté sur la Figure 8, comporte une vis 3 et un écrou 4, qui sont destinés à assembler des éléments 1 et 2. Chacun de ces éléments 1 et 2 comporte un trou de passage, référencé respectivement 9 et 10, dans lesquels s'engage la tige 31 de la vis 3. Contrairement au système illustré dans la Figure précédente 7, dans le cas présent, c'est la vis 3 qui est engagée du côté inaccessible dans laquelle la zone sensible est représentée par des hachures en position supérieure de la Figure. Pour ce faire, l'élément 2 comporte, du côté de sa face externe 8, un logement 14 qui est destiné à recevoir la tête 32 de la vis 3. Ce logement 14 est dimensionné de manière à pouvoir maintenir en rotation et axialement cette tête 32. La vis 3 est ainsi montée en s'engageant dans l'élément 2, puis en pénétrant dans l'élément 1. La butée-guide 5 est alors engagée sur l'extrémité de la tige 31 de la vis 3 pour venir s'appliquer sur la face externe 7 de l'élément à assembler 1. Il suffit alors de monter l'écrou 4 dans l'extrémité de la tige 31 de la vis 3 et de bloquer l'ensemble. La butée-guide 5 est constituée comme la butée-guide décrite dans l'exemple précédent représenté sur la Figure 7. De plus, cette butée-guide 5 comporte un logement de centrage 57 qui est aménagé sur sa face externe conique 53. Ce logement de centrage 57 est destiné à recevoir l'écrou 4 qui reçoit le couple de serrage lors du blocage.

Le dispositif, représenté sur la Figure 9, comporte une vis 3 destinée à assembler deux éléments 1 et 2, et qui vient s'engager dans une partie taraudée 6 aménagée dans l'élément 2. Une butée-guide 5, analogue aux butées-guides décrites dans le premier exemple, est disposée du côté de la face externe 7 de l'élément à assembler 1. De plus, cette butée-guide 5 est reliée à cet élément 1 par une section de cisaillement qui se détache lors de l'ouverture de la butée-guide 5, c'est-à-dire lors de l'application du couple de serrage lors du blocage. Dans ce type de montage, la vis 3 vient s'engager par l'intermédiaire de sa tige 31 dans la butée-guide 5, et dans le trou 9 aménagé dans l'élément 1 à assembler de faible épaisseur, pour finalement venir s'engager dans la partie taraudée 6 qui est aménagée dans l'autre élément 2 à assembler. La butée-guide 5 sert à la fois de prépositionnement axial, et de chanfrein provisoire et escamotable, qui est assuré par la face externe conique 53. On a ainsi la possibilité supplémentaire de guider la vis 3, ce qui est particulièrement intéressant dans le cas notamment d'un montage en aveugle où part un manipulateur. Cette caractéristique est également intéressante dans le cas où le positionnement des éléments à assembler 1 et 2 est imprécis, par exemple, du fait de la dispersion dimensionnelle dans les structures automobiles.

Le dispositif, représenté sur la Figure 10, comporte une vis 3 destinée à assembler deux éléments 1 et 2, qui vient s'engager dans une partie taraudée 6 aménagée dans l'élément 2. L'élément 1 à assembler de faible épaisseur possède un trou de passage 9 aligné avec la partie taraudée 6 de l'élément 2. De plus, cet élément 1 à assembler possède un bossage cylindrique 15 qui est concentrique au trou 9. La butée-guide 5 qui est d'une structure analogue à celle décrite dans l'exemple de la Figure 7, comporte de plus un logement cylindrique 58 qui est aménagé sur sa face interne 54, et dont les dimensions correspondent au bossage cylindrique 15. Pour effectuer le montage du dispositif de fixation représenté sur la Figure 10, il suffit d'engager la butée-guide 5 sur le bossage cylindrique 15 de l'élément 1 par l'intermédiaire de son logement cylindrique 58, et de présenter ensuite la vis 3 qui traverse cette butée-guide 5 et le trou 9 aménagé dans l'élément 1 à assembler de faible épaisseur, pour venir s'engager dans la partie taraudée 6 aménagée dans l'élément 2. Lors de cette manoeuvre de blocage, la butée-guide 5 est maintenue en rotation et axialement par un dispositif approprié.

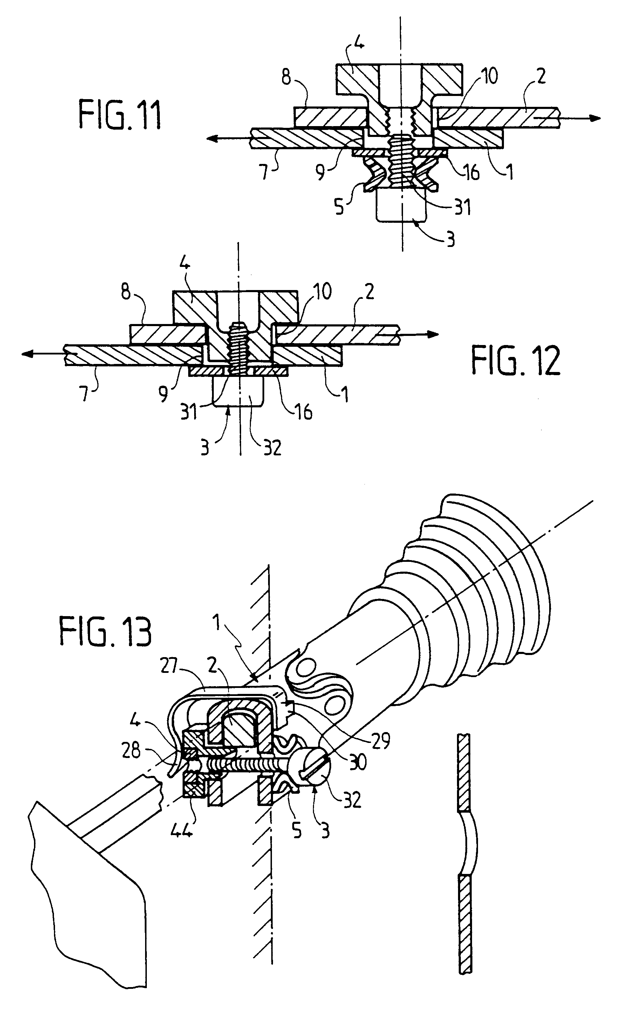

Le dispositif selon l'invention, représenté sur les Figures 11 et 12, comporte une vis 3 et un écrou 4 qui sont destinés à assurer l'assemblage de deux éléments 1 et 2. Chacun des éléments 1 et 2 possède un trou, référencé respectivement 9 et 10 destinés à recevoir l'écrou 4. Cet écrou 4 est disposé du côté de l'élément à assembler 2 et il pénètre successivement dans le trou 10 de cet élément 2 et dans le trou 9 de l'élément 1. A l'opposé du côté de la face 7 de l'élément à assembler 1, sont disposées une rondelle d'appui 16, et une butée-guide 5 de structure analogue à celle décrite à la Figure 7. La vis 3 traverse au moyen de sa tige 31 cette butée-guide 5, ainsi que la rondelle d'appui 16, pour venir s'engager dans l'écrou 4 qui est maintenu en rotation et axialement. La Figure 11 représente le dispositif de l'invention lors du début de la manoeuvre de serrage du dispositif, tandis que la Figure 12 représente le même dispositif en position bloquée, c'est-à-dire lorsque la butée-guide 5 a été éjectée et que la tête 32 de la vis 3 est venue s'appliquer sur la rondelle d'appui 16 contre la face externe 7 de l'élément 1. Ce mode de réalisation de l'invention met en lumière une autre caractéristique de l'invention qui, à l'aide de la butée-guide 5, permet de limiter la course de l'écrou 4 qui positionne deux éléments ou n éléments, ces éléments étant soumis à des efforts suivant les directions des flêches représentées sur les Figures. Ces efforts auraient en effet pour conséquence de modifier le positionnement relatif des éléments 1 et 2, si l'écrou 4 venait se dégager de l'un au moins de ces éléments 1 et 2.

Le dispositif de fixation selon l'invention, représenté sur les Figures 13 à 18, se rapporte à une vis 3 et à un écrou 4 qui sont destinés à bloquer ensemble un élément à assembler en forme d'étrier 1, avec un élément à assembler mâle 2. Dans le cas représenté sur ces Figures, l'étrier 1 est solidaire d'une colonne de direction d'automobile, et l'élément à assembler mâle 2 est solidaire de l'axe du boîtier de direction. Dans cette configuration, l'élément à assembler en forme d'étrier 1 a une section en U qui possède deux branches 11 et 12, qui sont sensiblement parallèles l'une par rapport à l'autre, et qui sont reliées par un pont 13. L'élément à assembler mâle 2 s'engage entre les branches 11 et 12 de cet étrier 1. Cet élément à assembler mâle 2 est de section non circulaire et il possède trois méplats référencés 21, 22 et 23, ainsi qu'un secteur cylindrique 24. Selon cette réalisation, les deux méplats 21 et 22 sont disposés symétriquement par rapport au secteur cylindrique 24, et ils sont parallèles l'un par rapport à l'autre, de manière à pouvoir coulisser entre les branches 11 et 12 de l'étrier 1. Le troisième méplat 23 est perpendiculaire aux deux autres méplats 21 et 22.

Un trou 19 est aménagé dans la branche 11 de l'étrier 1, et un logement 20 est aménagé dans la branche 12. Le trou 19 a des dimensions qui correspondent au passage de la tige 31 de la vis 3, et il est aligné avec le logement 20 qui a des dimensions plus importantes de manière à correspondre aux dimensions du support 41 de l'écrou 4. Une butée-guide 5 de structure analogue à celle décrite à la Figure 7 est disposée du côté de la face externe 7 de la branche 11 de l'étrier 1. La vis 3 vient s'engager par l'intermédiaire de sa tige 31 dans la butée-guide 5, et elle traverse le trou 19 de la branche 11 de l'étrier 1 afin de venir s'engager dans l'écrou 4, dont le support 41 est monté dans le logement 20 de la branche 12 correspondante de l'étrier 1. Le support d'écrou 41 est maintenu en rotation et axialement dans ce logement 20. Pour cela, un clip 27 est monté sur le dispositif. Ce clip 27 est en forme de mâchoire et il vient coiffer l'étrier 1. Ce clip 27 a l'une de ses extrémités qui possède une face incurvée 28, qui vient s'appliquer contre l'écrou 4 ou le support d'écrou 41. Ce clip 27 a son autre extrémité 29 qui vient s'appuyer contre la face externe 7 de l'autre branche 11 de l'étrier 1, sur laquelle s'applique la butée-guide 5. En plus du maintien axial de l'écrou 4 assuré par le clip 27, un maintien en rotation de cet écrou 4 est assuré par la configuration du logement 20 avec le support 41 d'écrou 4. Pour cela, ce support 41 d'écrou 4 comporte une extrémité circulaire 42 et un corps 44. L'extrémité circulaire 42 est munie d'un méplat 43 qui s'engage dans le logement circulaire 20 qui possède un méplat 18 de dimension correspondante. Ainsi, cette extrémité circulaire 42 vient se monter dans une partie cylindrique 25 du logement 20, le méplat 43 de cette extrémité circulaire 42 coopérant avec le méplat 18 du logement 20. De plus, le méplat 43 est dimensionné de manière à pouvoir venir s'appliquer sous le troisième méplat 23 de l'élément à assembler mâle en fin de blocage. De plus, le corps 44 comporte l'écrou 4 qui est de dimension plus importante que l'extrémité circulaire 42. Ce corps 44 reçoit l'écrou 4, et il vient s'appliquer en fin de blocage contre la face externe 17 de la branche 12 correspondante de l'étrier 1.

Afin d'améliorer encore les caractéristiques du dispositif de fixation, l'écrou 4 comporte un frein d'écrou 45.

Pour assurer le montage de l'ensemble, il faut d'abord monter l'écrou 4 dans l'étrier 1, et disposer le clip 27 sur cet étrier 1. Après quoi, on peut engager la vis 3 par l'intermédiaire de sa tige 31 à travers la butée-guide 5 qui vient s'appliquer contre la face 7 de la branche 11 de l'étrier 1, de manière à engager la tige 31 dans l'écrou 4.

Afin d'améliorer encore le dispositif de l'invention, on peut prévoir un arrêt en rotation de la butée-guide 5 qui permette d'orienter cette butée-guide 5, afin d'assurer une direction convenable d'éjection. Pour cela, l'arrêt en rotation de la butée-guide 5 est constituée par un prolongement 30 de l'extrémité 29 du clip 27, qui vient pénétrer dans l'ouverture 55 de la butée-guide 5 de manière à orienter son éjection lors du blocage. Un autre système d'arrêt en rotation est représenté sur la Figure 15, et il consiste en un arrêt en rotation 26 qui est monté dans la branche 11 de l'étrier 1 sur lequel s'applique la butée-guide 5. Cet arrêt en rotation 26 pénètre dans l'ouverture 55 de la butée-guide 5, qui est ainsi orientée de manière à garantir une direction convenable de son éjection lors du blocage. Dans le mode de réalisation du blocage en rotation représenté sur les Figures 14, 16 et 17, on voit qu'il est indispensable d'orienter convenablement la butée-guide 5 lors du montage, la Figure 16 montrant la butée-guide 5 avant le positionnement correct, et la Figure 17 montrant la mise en place convenable de cette butée-guide 5, dans laquelle l'extrémité 30 du clip 27 pénètre dans l'ouverture 55.

Le mode de réalisation de l'invention représenté sur les Figures 13 à 18 illustre des caractéristiques de l'invention qui consistent à fiabiliser un montage en aveugle d'un axe de boîtier de direction avec l'étrier d'extrémité d'une colonne de direction automobile. Dans le cas où la vis 3 serait mise en place trop rapidement par l'opérateur, on pourrait avoir un dégagement de l'écrou 4 par rapport à la face interne de la branche 12 de l'étrier 1, comme cela a été représenté sur les Figures 5 et 6. Comme l'un des éléments à assembler peut être sollicité par une force quelconque due par exemple à la contrainte exercée par un joint de tablier de raideur suffisante pour déplacer l'un des éléments 1 et 2, il peut se faire que ces éléments à assembler se trouvent positionnés selon la configuration des Figures 5 et 6. Dans cette dernière configuration, l'opérateur, tout en ayant appliqué le couple de serrage nécessaire, n'aura pas la certitude d'avoir les conditions de montage de sécurité. Il y aura un engagement de la vis 3 dans l'écrou 4 insuffisant, et le frein d'écrou 45 ne sera pas sollicité. De plus, il y aura absence de plaquage de l'axe du boîtier de direction par rapport à la zone circulaire du pont 13, reliant les branches 11 et 12 de l'étrier 1. Ces points de mauvaise qualité provoqueraient, de façon évidente et à court terme, la perte de direction du véhicule et une telle situation ne peut être acceptable. En effet, on aurait un désalignement des éléments à assembler 1 et 2, et par conséquent, des contraintes dans le système lors de chaque rotation, ce qui à terme provoquerait une dégradation de la transmission de direction.

## Revendications

1. Dispositif de fixation destiné à assembler au moins deux éléments (1, 2) comprenant un système avec une vis (3) et un écrou (4), caractérisé en ce que l'un des éléments (1) est solidaire d'une colonne de direction automobile et l'autre élément (2) solidaire d'un axe de boîtier de direction et en ce que ledit dispositif comprend une butée-guide (5) axiale escamotable disposée entre la face externe (7) de l'un des éléments à assembler (1) et la tête (32) de la vis (3) ou l'écrou (4), qui reçoit le couple de serrage pour venir s'appliquer sur cette face externe (7), ladite butée-guide (5), permettant dans un premier temps, d'assurer un prépositionnement relatif temporaire et axial de la vis (3) ou l'écrou (4) , ladite butée-guide (5) étant, dans un deuxième temps, apte à s'esquiver sous l'effet de la force axiale de pénétration lorsque la vis continue à être serrée jusqu'au blocage de la fixation.

2. Dispositif de fixation selon la revendication 1, caractérisé en ce que la butée-guide (5) est constituée par une couronne (51):
- dont l'évidement central (52) a des dimensions permettant le passage de la tige (31) de la vis (3),
- dont la périphérie de la partie externe a des dimensions supérieures aux dimensions de la tête (32) de la vis (3) ou de l'écrou (4);
- et dont la face externe (53) sur laquelle s'applique la tête (32) de la vis (3) ou l'écrou (4), est conique.

3. Dispositif de fixation selon la revendication 2, caractérisé en ce que la partie centrale de la butée-guide (5) a des dimensions plus grandes que les dimensions de la tête (32) de la vis (3) ou de l'écrou (4) de serrage, cette partie centrale ayant des caractéristiques mécaniques faibles par rapport aux caractéristiques de la partie externe, de manière que sous l'action du couple de serrage, elle s'écrase et soit rejetée à l'extérieur vers la partie externe, qui est ainsi éjectée en passant à travers la tête (32) de la vis (3) ou de l'écrou (4) de serrage.

4. Dispositif de fixation selon la revendication 3, caractérisé en ce que la butée-guide (5) comporte une ouverture (55) sur toute sa longueur axiale, de manière que, sous l'action du couple de serrage, elle s'ouvre et puisse passer à travers la tige (31) de la vis (3) ou de l'écrou (4) de serrage.

5. Dispositif de fixation selon la revendication 4, caractérisé en ce que la butée-guide (5) comporte une entaille (56) aménagée à la périphérie de la partie externe, et disposée de manière à être diamétralement opposée à l'ouverture (55).

6. Dispositif de fixation selon la revendication 4, caractérisé en ce que la butée-guide (5) comporte des entailles (56) aménagées à la périphérie de la partie externe, et disposées symétriquement par rapport à l'ouverture (55).

7. Dispositif de fixation selon la revendication 6, caractérisé en ce que la butée-guide (5) comporte des entailles (56), qui sont disposées de manière à être diamétralement opposées.

8. Dispositif de fixation selon l'une quelconque des revendications 2 à 7, caractérisé en ce que la face externe (53) et la face interne (54) de la butée-guide (5) sont deux faces coniques, symétriques par rapport au plan radial central de l'axe longitudinal de cette butée-guide (5).

9. Dispositif de fixation selon l'une quelconque des revendications 2 à 7, caractérisé en ce que la butée-guide (5) présente une face interne (54) opposée à la face externe (53) conique, qui comporte un logement cylindrique (58) destiné à s'engager dans un bossage (15) de l'élément (1) à assembler correspondant.

10. Dispositif de fixation selon l'une quelconque des revendications 2 à 7, caractérisé en ce que la butée-guide (5) présente une face externe (53) conique, qui comporte un logement de centrage (57) destiné à recevoir l'écrou (4) recevant le couple de serrage.

11. Dispositif de fixation selon l'une des revendications 4 à 8, caractérisé en ce que la tige (31) de la vis (3) traverse la butée-guide (5) et les trous (9,10) aménagés dans les éléments (1, 2) à assembler, pour venir s'engager dans l'écrou (4) maintenu en place en rotation et axialement dans un logement (14) aménagé dans la face externe (8) de l'élément à assembler (2), qui est disposé à l'autre extrémité de l'ensemble des éléments à assembler par rapport à la face externe (7) en contact avec la butée-guide (5).

12. Dispositif de fixation selon la revendication 10, caractérisé en ce que la tige (31) de la vis (3) traverse des trous (9, 10) aménagés dans les éléments (1, 2) à assembler, pour venir s'engager dans la butée-guide (5) et dans l'écrou (4) disposé à l'autre extrémité de l'ensemble des éléments à assembler par rapport à la face externe (8) en contact avec la tête (32) de la vis (3), qui est maintenue en place en rotation et axialement dans un logement (14) aménagé dans l'élément (2) à assembler correspondant, l'écrou (4) étant monté dans le logement (57) de centrage de la butée-guide (5).

13. Dispositif de fixation selon l'une quelconque des revendications 4 à 8, caractérisé en ce que la tige (31) de la vis (3) traverse la butée-guide (5), une rondelle d'appui (16) du premier élément (1) à assembler et le trou (9) aménagé dans cet élément (1) pour venir s'engager dans l'écrou (4) qui traverse le trou (10) du deuxième élément (2) à assembler et qui s'engage dans le trou (9) du premier élément (1) à assembler, l'écrou (4) étant maintenu en place en rotation et axialement dans ces deux trous (9, 10).

14. Dispositif de fixation selon l'une quelconque des revendications 4 à 8, caractérisé en ce qu'il comporte:
- un élément à assembler en forme d'étrier (1) de section en U possédant deux branches (11, 12) sensiblement parallèles reliées par un pont (13);
- un élément à assembler mâle (2) s'engageant entre les branches (11, 12) de l'étrier (1), qui est de section non circulaire, possédant trois méplats (21, 22, 23) et un secteur cylindrique (24), deux méplats (21, 22) étant disposés symétriquement par rapport au secteur cylindrique (24) et parallèles l'un à l'autre, de manière à pouvoir coulisser entre les branches (11, 12) de l'étrier (1), le troisième méplat (23) étant perpendiculaire aux deux autres méplats (21, 22);
- un trou (19) étant aménagé dans l'une des branches (11) de l'étrier (1), et un logement (20) étant aménagé dans l'autre branche (12), le trou (19) ayant des dimensions correspondantes au passage de la tige (31) de la vis (3) et étant aligné avec le logement (20), qui a des dimensions plus importantes, correspondant aux dimensions du support (41) de l'écrou (4);
- la vis (3), dont la tige (31) traverse la butée-guide (5) et le trou (19) de la branche (11) correspondante de l'étrier (1), venant s'engager dans l'écrou (4) dont le support (41) est monté dans le logement (20) de la branche (12) correspondante de l'étrier (1), le support (41) d'écrou ( 4) étant maintenu en rotation et axialement dans ce logement (20).

15. Dispositif de fixation selon la revendication 14, caractérisé en ce que le support (41) d'écrou (4) comporte:
- une extrémité circulaire (42) munie d'un méplat (43) qui s'engage dans le logement circulaire (20) avec un méplat (18) de dimensions correspondantes, le méplat (43) de l'extrémité circulaire (42) venant s'appliquer sous le troisième méplat (23) de l'élément à assembler (2) en fin de blocage;
- un corps (44) de dimensions plus importantes que l'extrémité circulaire (42), qui reçoit l'écrou (4) et vient s'appuyer en fin de blocage contre la face externe (17) de la branche (12) correspondante de l'étrier (1).

16. Dispositif de fixation selon la revendication 15, caractérisé en ce que l'écrou (4) comporte un frein d'écrou (45).

17. Dispositif de fixation selon l'une quelconque des revendications 14 à 16, caractérisé en ce qu'un arrêt en rotation (26) de la butée - guide (5) est monté dans la branche (11) de l'étrier (1) sur laquelle s'applique la butée-guide (5), cet arrêt en rotation (26) pénétrant dans l'ouverture (55) de la butée-guide (5), de manière à orienter son éjection lors du blocage.

18. Dispositif de fixation selon l'une quelconque des revendications 14 à 16, caractérisé en ce qu'un clip (27) en forme de mâchoire vient coiffer l'étrier (1), et dont l'une des extrémités a une face incurvée (28) qui vient s'appliquer contre le corps (44) du support (41) d'écrou (4), et dont l'autre extrémité (29) vient s'appuyer contre la face externe (7) de l'autre branche (11) de l'étrier (1) sur laquelle s'applique la butée-guide (5).

19. Dispositif de fixation selon la revendication 18, caractérisé en ce qu'un arrêt en rotation de la butée-guide (5) est constitué par un prolongement (30) de l'extrémité (29) du clip (27), qui vient pénétrer dans l'ouverture (55) de la butée-guide (5), de manière à orienter son éjection lors du blocage.

## Claims

1. Fastening device for assembling at least two elements (1,2) comprising a system with a screw (3) and a nut (4), characterized in that one of the elements (1) is integral with a car steering column and the other element (2) is integral with a steering box axle and in that said device comprises an axial removable guiding stop (5) arranged between the external surface (7) of one of the elements to be assembled (1) and the head (32) of the screw (3) or the nut (4) which receives the tightening torque to be applied on this external surface (7), said guiding stop (5) in a first stage allowing to ensure a relative temporary and axial prepositioning of the screw (3) or the nut (4), said guiding stop (5) in a second stage being liable to be removed under the axial force of penetration when the screw is tightened until the locking of the fastening device.

2. Fastening device according to claim 1, characterized in that the guiding stop (5) comprises a crown (51):
- whose centre recess (52) has sizes enabling the passage of the stem (31) of the screw (3),
- whose periphery of the external section has sizes larger than those of the head (32) of the screw (3) or the nut (4),
- and whose external surface (53) on which the head (32) of the screw (3) or the nut (4) applies, is conical in shape.

3. Fastening device according to claim 2, characterized in that the centre section of the guiding stop (5) has sizes larger than those of the head (32) of the screw (3) or of the tightening nut (4), whereas this centre section exhibits low mechanical strenghths with respect to those of the external section, so that under the action of the tightening torque, it is crushed and forced outside towards the external section, which is thus ejected while passing through the head (32) of the screw (3) or of the tightening nut (4).

4. Fastening device according to claim 3, characterized in that the guiding stop (5) comprises an opening (55) all over its axial length, so that under the action of the tightening torque, it opens and may go through the stem (31) of the screw (3) or the tightening nut (4).

5. Fastening device according to claim 4, characterized in that the guiding stop (5) comprises a notch (56) provided at the periphery of the external section and arranged diametrically opposite the opening (55).

6. Fastening device according to claim 4, characterized in that the guiding stop (5) comprises notches (56) provided at the periphery of the external section and arranged symmetrically with respect to the opening (55).

7. Fastening device according to claim 6, characterized in that the guiding stop (5) comprises notches (56) which are arranged diametrically opposite one another.

8. Fastening device according to any one of claims 2 to 7, characterized in that the external surface (53) and the internal surface (54) of the guiding stop (5) are both conical in shape, symmetrical with respect to the radial centre plane of the longitudinal axis of this guiding stop (5).

9. Fastening device according to any one of claims 2 to 7, characterized in that the guiding stop (5) has its internal surface (54) opposite the conical external surface (53), which comprises a cylindrical housing (58) designed for engaging into a boss (15) of the corresponding element (1) to be assembled.

10. Fastening device according to any one of claims 2 to 7, characterized in that the guiding stop (5) has its external surface (53) conical in shape and comprises a centering housing (57) designed for accommodating the nut (4) which receives the tightening torque.

11. Fastening device according to any one of claims 4 to 8, characterized in that the stem (31) of the screw (3) goes through the guiding stop (5) and the holes (9, 10) provided in the elements (1, 2) to be assembled in order to engage into the nut (4) held in place in rotation and axially in a housing (14) provided in the external surface (8) of the element to be assembled (2), which is arranged at the other end of the set of elements to be assembled with respect to the external surface (7) in contact with the guiding stop (5).

12. Fastening device according to claim 10, characterized in that the stem (31) of the screw (3) goes through the holes (9, 10) provided in the elements (1, 2) to be assembled to engage into the guiding stop (5) and into the nut (4) arranged at the other end of the set of elements to be assembled with respect to the external surface (8) in contact with the head (32) of the screw (3), which is held in place in rotation and axially in a housing (14) provided in the corresponding element (2) to be assembled, whereas the nut (4) is mounted in the centering housing (57) of the guiding stop (5).

13. Fastening device according to any one of claims 4 to 8, characterized in that the stem (31) of the screw (3) goes through the guiding stop (5), a bearing washer (16) of the first element (1) to be assembled and the hole (9) provided in this element (1) to engage into the nut (4) passing through the hole (10) of the second element (2) to be assembled and which engages into the hole (9) of the first element (1) to be assembled, whereas the nut (4) is held in place in rotation and axially in both these holes (9, 10).

14. Fastening device according to any one of claims 4 to 8, characterized in that it comprises:
- an element to be assembled in the form of a bracket (1) of a U-section having two legs (11, 12) substantially parallel linked by a bridge (13);
- a male element to be assembled (2) engaging between the legs (11, 12) of the bracket (1) which is of non-circular section, having three flat surfaces (21, 22, 23) and a cylindrical zone (24), two flat surfaces (21, 22) being symmetrical with respect to the cylindrical zone (24) and parallel one to another, in order to be liable to slide between the legs (11, 12) of the bracket (1), the third flat surface (23) being perpendicular to the other two flat surfaces (21, 22):
- a hole (19) provided in one of the legs (11) of the bracket (1) and a housing (20) provided in the other leg (12), whereas the hole (19) has sizes corresponding to the passage of the stem (31) of the screw (3) and is aligned with the housing (20), which has larger sizes corresponding to the sizes of the support (41) of the nut (4);
- the screw (3) whose stem (31) goes through the guiding stop (5) and the hole (19) of the corresponding leg (11) of the bracket (1), engaging into the nut (4) whose support (41) is mounted in the housing (20) of the corresponding leg (12) of the bracket (1) whereas the support (41) of the nut (4) is held in rotation and axially in this housing (20).

15. Fastening device according to claim 14, characterized in that the support (41) of the nut (4) comprises:
- a circular extremity (42) provided with a flat surface (43) engaging into the circular housing (20) with a flat surface (18) with corresponding sizes, whereas the flat surface (43) of the circular extremity (42) is applied under the third flat surface (23) of the element to be assembled (2) at locking stop end;
- a body (44) with sizes larger than the circular extremity (42), which accommodates the nut (4) and engages at locking stop end the external surface (17) of the corresponding leg (12) of the bracket (1).

16. Fastening device according to claim 15, characterized in that the nut (4) comprises a nut brake (45).

17. Fastening device according to any one of claims 14 to 16, characterized in that a rotation stop pin (26) of the guiding stop (5) is mounted in the leg (11) of the bracket (1) on which the guiding stop (5) is engaging, whereas this rotation stop pin (26) penetrates into the opening (55) of the guiding stop (5), in order to control the direction of its ejection at locking.

18. Fastening device according to any one of claims 14 to 16, characterized in that a clip (27) in the shape of a jaw encompasses the bracket (1) and whose one extremity comprises a curved surface (28) engaging the body (44) of the support (41) of the nut (4) and whose other extremity (29) engages the external surface (7) of the other leg (11) of the bracket (1) on which the guiding stop (5) is engaging.

19. Fastening device according to claim 18, characterized in that a rotation stop pin of the guiding stop (5) consists in an extension (30) of the extremity (29) of the clip (27) which penetrates into the opening (55) of the guiding stop (5), in order to control the direction of its ejection at locking.

## Patentansprüche

1. Haltevorrichtung zum Verbinden von wenigstens zwei Elementen (1, 2), die ein System mit einer Schraube (3) und einer Mutter (4) aufweist, dadurch gekennzeichnet, daß eines der Elemente (1) fest mit einer Kraftfahrzeuglenksäule verbunden ist und das andere Element (2) fest mit einer Lenkgehäusespindel verbunden ist und daß die Vorrichtung eine zwischen der äußeren Fläche (7) eines der zu verbindenden Elemente (1) und dem Kopf (32) der Schraube (3) oder der Mutter (4) angeordnete entfernbare Zentrierbüchse (5) aufweist, die das Spanndrehmoment aufnimmt, um sich auf dieser äusseren Fläche (7) abzustützen, damit die Zentrierbüchse (5) zunächst eine vorübergehende relative axiale Vorpositionierung der Schraube (3) oder der Mutter (4) gewährleistet, wobei die Zentrierbüchse (5) anschliessend unter der Wirkung der axialen Eindringkraft ausweichen kann, wenn die Schraube bis zur Verblockung der Halterung weitergespannt wird.

2. Haltevorrichtung nach Anspruch 1, dadurch gekennzeichnet, daß die Zentrierbüchse (5) eine Krone (51) aufweist,
- deren zentrale Öffnung (52) Abmessungen hat, die den Durchgang des Schaftes (31) der Schraube (3) ermöglichen;
- von der der Rand des Außensteils größere Abmessungen als der Kopf (32) der Schraube oder der Mutter (4) hat;
- und deren äußere Fläche (53), auf der der Kopf (32) der Schraube (3) oder der Mutter (4) aufliegt, kegelförmig ist.

3. Haltevorrichtung nach Anspruch 2, dadurch gekennzeichnet, daß das zentrale Teil der Zentrierbüchse (5) größere Abmessungen als die des Kopfes (32) der Schraube (3) oder der Spannmutter (4) hat, wobei dieses mittlere Teil über gegenüber den Eigenschaften des äusseren Teils schwächere mechanische Eigenschaften verfügt, so daß es unter der Wirkung des Spanndrehmoments zerdrückt und nach außen zum äußeren Teil verdrängt wird, wodurch es über den Kopf (32) der Schraube (3) oder der Mutter (4) ausgestoßen wird.

4. Haltevorrichtung nach Anspruch 3, dadurch gekennzeichnet, daß die Zentrierbüchse (5) über ihre ganze axiale Länge eine Öffnung (55) aufweist, damit sie sich unter der Wirkung des Spanndrehmoments öffnet und über den Schaft (31) der Schraube (3) oder die Mutter (4) dringen kann.

5. Haltevorrichtung nach Anspruch 4, dadurch gekennzeichnet, daß die Zentrierbüchse (5) eine am Rand des äußeren Teils angelegte Kerbe (56) aufweist, die so angeordnet ist, daß sie der Öffnung (55) diametral gegenüber liegt.

6. Haltevorrichtung nach Anspruch 4, dadurch gekennzeichnet, daß die Zentrierbüchse (5) am Rand des äußeren Teils angelegte und symmetrisch zur Öffnung (55) angeordnete Kerben (56) aufweist.

7. Haltevorrichtung nach Anspruch 4, dadurch gekennzeichnet, daß die Zentrierbüchse (5) Kerben (56) aufweist, die so angeordnet sind, daß sie diametral gegenüber liegen.

8. Haltevorrichtung nach einem der Ansprüche 2 bis 7, dadurch gekennzeichnet, daß die äußere Fläche (53) und die innere Fläche (54) der Zentrierbüchse (5) zwei kegelförmige, zur zentralen radialen Ebene der Längsachse dieser Zentrierbüchse (5) symmetrische Flächen sind.

9. Haltevorrichtung nach einem der Ansprüche 2 bis 7, dadurch gekennzeichnet, daß die Zentrierbüchse (5) eine innere, der äußeren kegelförmigen Fläche (53) gegenüberliegende Fläche (54) aufweist, die einen zylindrischen Raum (58) zur Aufnahme eines vorspringenden Rings (15) des jeweiligen zu verbindenden Elements (1) bietet.

10. Haltevorrichtung nach einem der Ansprüche 2 bis 7, dadurch gekennzeichnet, daß die Zentrierbüchse (5) eine äußere kegelförmige Fläche (53) aufweist, die einen Zentrierraum (57) zum Aufnehmen der das Spanndrehmoment aufnehmenden Mutter (4) aufweist.

11. Haltevorrichtung nach einem der Ansprüche 4 bis 8, dadurch gekennzeichnet, daß der Schaft (31) der Schraube (3) die Zentrierbüchse (5) und die in die zu verbindenden Elemente (1, 2) eingebrachten Löcher (9, 10) durchdringt, um in die Mutter (4) einzugreifen, die drehbar und axial in einem Raum (14) gehalten wird, der in der äußeren Fläche (8) des zu verbindenden Elements (2) erzeugt ist, die bezüglich der die Zentrierbüchse (5) aufnehmenden äusseren Fläche (7) am anderen Ende der Gesamtheit der zu verbindenden Elemente angeordnet ist.

12. Haltevorrichtung nach Anspruch 10, dadurch gekennzeichnet, daß der Schaft (31) der Schraube (3) die in die zu verbindenden Elementen (1, 2) eingebrachten Löcher (9, 10) durchdringt, um in die Zentrierbüchse (5) und die Mutter (4) einzugreifen, die bezüglich der den Kopf (31) der Schraube (3) aufnehmenden äusseren Fläche (7) am anderen Ende der Gesamtheit der zu verbindenden Elemente angeordnet ist, wobei sie drehbar und axial in einem in der äusseren Fläche (8) des entsprechenden zu verbindenden Elements (2) erzeugten Raum (14) gehalten wird, wobei die Mutter (4) im Zentrierraum (57) der Zentrierbüchse (5) angebracht ist.

13. Haltevorrichtung nach einem der Ansprüche 4 bis 8, dadurch gekennzeichnet, daß der Schaft (31) der Schraube (3) die Zentrierbüchse (5), einen Stützring (16) des ersten zu verbindenden Elements (1) und das in dieses Element (1) eingebrachte Loch (9) durchdringt, um in die Mutter (4) einzugreifen, die das Loch (10) des zweiten Elements (2) durchdringt und in das Loch (9) des ersten zu verbindenden Element (1) eindringt, wobei die Mutter (4) drehbar und axial in diesen beiden Löchern (9, 10) gehalten wird.

14. Haltevorrichtung nach einem der Ansprüche 4 bis 8, dadurch gekennzeichnet, daß sie
- ein bügelförmiges zu verbindendes Element (1) mit U-förmigem Querschnitt, das zwei im wesentlichen parallel angeordnete und durch eine Brücke (13) verbundene Zweige (11, 12) aufweist,
- ein männliches zu verbindendes Element (2), das zwischen den Zweigen (11, 12) des Bügels (1) eingefügt ist und dessen Querschnitt nicht kreisrund ist, das drei Abflachungen (21, 22, 23) und einen zylindrischen Abschnitt (24) hat, wobei zwei Abflachungen (21, 22) symmetrisch zum zylindrischen Abschnitt (24) und parallel zueinander angeordnet sind, so daß es zwischen die Zweige (11, 12) des Bügels (1) gleiten kann, wobei die dritte Abflachung (23) zu den beiden anderen Abflachungen (21, 22) senkrecht ist, aufweist, wobei
- ein Loch (19) in einem der Zweige (11) des Bügels (1) erzeugt ist und ein Raum (20) im anderen Zweig (12) erzeugt ist, wobei das Loch (19) zum Durchgang des Schaftes (31) der Schraube (3) passende Abmessungen hat und auf den Raum (20) ausgerichtet ist, der grössere Abmessungen hat, die den Abmessungen des Trägers (41) der Mutter (4) entsprechen;
- die Schraube (3), deren Schaft (31) die Zentrierbüchse (5) und das Loch (19) des entsprechenden Zweiges (11) des Bügels (1) durchdringt, in die Mutter (4) eingreift, deren Träger (41) im Raum (20) des dem Bügel entsprechenden Zweigs (12) montiert ist, wobei der Träger(41) der Mutter (4) drehbar und axial in diesem Raum (20) gehalten ist.

15. Haltevorrichtung nach Anspruch 14, dadurch gekennzeichnet, daß der Träger (41) der Mutter (4)
- ein mit einer Abflachung (43) ausgestattetes kreisrundes Ende (42), das in den kreisrunden Raum (20) mit einer Abflachung (18) mit passenden Abmessungen eingeführt wird, wobei die Abflachung (43) des kreisrunden Endes (42) am Ende der Verblockung unter der dritten Abflachung (23) des zu verbindenden Elements (2) anliegt,
- einen Körper (44) mit grösseren Abmessungen als denen des kreisrunden Endes (42), der die Mutter (4) aufnimmt und am Ende der Verblockung gegen die äußere Fläche (17) des entsprechenden Zweigs (12) des Bügels (1) drückt,
aufweist.

16. Haltevorrichtung nach Anspruch 15, dadurch gekennzeichnet, daß die Mutter (4) eine Muttersicherung (45) aufweist.

17. Haltevorrichtung nach einem der Ansprüche 14 bis 16, dadurch gekennzeichnet, daß ein Umdrehungsanschlag (26) der Zentrierbüchse (5) in dem Zweig (11) des Bügels (1) montiert ist, auf dem sich die Zentrierbüchse (5) abstützt, wobei dieser Umdrehungsanschlag (26) in die Öffnung der Zentrierbüchse (5) eindringt, um bei der Verblockung deren Auswurf zu lenken.

18. Haltevorrichtung nach einem der Ansprüche 14 bis 16, dadurch gekennzeichnet, daß eine backenförmige Klammer (27) auf dem Bügel (1) aufgesetzt ist, von deren Enden eines eine gewölbte Fläche hat, die gegen den Körper (44) des Trägers (41) der Mutter (4) drückt, und deren anderes Ende (29) sich auf der äußeren Fläche (7) des anderen Zweigs (11) des Bügels (1) abstützt, auf der die Zentrierbüchse (5) aufliegt.

19. Haltevorrichtung nach Anspruch 18, dadurch gekennzeichnet, daß ein Umdrehungsanschlag der Zentrierbüchse (5) von einer Verlängerung (30) des Endes (30) der Klammer (27) gebildet ist, die in die Öffnung (55) der Zentrierbüchse (5) eindringt, um bei der Verblockung deren Auswurf zu lenken.
